# EUROPÄISCHE PATENTSCHRIFT

(11) **EP 1 917 707 B1**
(45) Veröffentlichungstag und Bekanntmachung des Hinweises auf die Patenterteilung: **15.04.2009**
(21) Anmeldenummer: 06776160.1
(22) Anmeldetag: 07.07.2006
(51) Int. Cl.: H02J 1/14, H02J 3/14, H02J 13/00

(54) **LEISTUNGSBEDARFSKONTROLLIERTES MODULARES SYSTEM**
MODULAR SYSTEM CONTROLLED ACCORDING TO POWER REQUIREMENTS
SYSTEME MODULAIRE A PUISSANCE NECESSAIRE CONTROLEE

(30) Priorität: 23.08.2005 DE 102005039886
(43) Veröffentlichungstag der Anmeldung: 07.05.2008
(73) Patentinhaber: Carl Zeiss MicroImaging GmbH, 07745 Jena (DE)
(72) Erfinder: LIEDTKE, Mirko, 07743 Jena (DE); MÖHLER, Gunter, 07745 Jena (DE)
(74) Vertreter: Geyer, Fehners & Partner
(86) Internationale Anmeldenummer: PCT/EP2006/006666
(87) Internationale Veröffentlichungsnummer: WO 2007/022828

(56) Entgegenhaltungen:
- WO-A-02/07365
- DE-A1- 10 208 981
- US-A1- 2003 151 309

## Beschreibung

Die Erfindung bezieht sich auf ein modulares System, das ein Hauptmodul und mehrere daran anschließbare Einzelmodule sowie ein das System mit Spannung versorgendes Netzteil aufweist. Die Erfindung bezieht sich weiter auf ein Verfahren zur Leistungsbedarfskontrolle bei einem solchen modularen System.

Modulare Systeme sind in der Technik vielfältig im Einsatz, da sie einfach anwenderspezifisch angepaßt werden können. Ein Beispiel für ein modulares System findet sich in der Mikroskopie: Moderne Mikroskope sind meist modular aufgebaut. Sie verfügen über ein Hauptmodu!, an das verschiedene optische und/oder elektrische Einzelmodule, wie beispielsweise Beleuchtungseinheiten, Lichtquellen, Detektoren o. ä., angebaut werden können. Eine anderes Beispiel für ein modulares System findet sich in der Computertechnik: Übliche PC sind durch ein- oder anbaubare Module, wie beispielsweise Graphikkarten, Festplatten, Ausgabegeräte, vielfältig konfigurierbar.

Bei modularen Systemen wird die Energieversorgung der Einzelmodule meist durch ein gemeinsames Netzteil bewerkstelligt. Dabei obliegt es dem Systemeinrichter, zu überwachen, daß die Leistung des Netzteils für den Betrieb des Systems in der gewählten modularen Zusammensetzung ausreicht. Bei Systemen, die meist in der gleichen Konfiguration betrieben werden, wie dies beispielsweise bei Computern der Fall ist, muß die Überprüfung, ob das Netzteil ausreichende Leistungsstärke hat, in der Regel nur bei der Erstzusammenstellung des Systems vorgenommen werden. Dokument US 2003 151 309 beschreibt eine Passagierbrücke, welche eine Stromversorgung sowie drei Teilsysteme und diesen zugeordnete Kontrollelemente aufweist. Die Kontrollelemente sind mittels einer Kommunikationsverbindung mit einem Prozessor verbunden. Der Prozessor ermittelt die Momentan-Leistung, die jeweils von den Teilsystenen benötigt wird. Auf dieser Basis steuert der Prozessor die Kontrollelemente so, dass die zur Verfügung gestellte Leistung optimal auf die Teilsysteme verteilt wird. Anders ist dies bei Systemen, die häufig durch Hinzufügen oder Wegnehmen von Einzelmodulen verändert werden, wie dies beispielsweise bei mikroskopischen Systemen gängig ist. Der Überwachungsaufwand wird also um so größer, je häufiger ein modulares System in seiner Konfiguration geändert wird.

Die Überprüfung, ob ein Netzteil ausreichende Kapazität hat, ist mitunter nicht einfach. Werden die Einzelmodule durch eine Versorgungsleiste elektrisch mit Energie versorgt, kann ein Spannungsabfall entlang der Versorgungsleiste zu einer Unterversorgung einiger Einzelmodule führen. Je nachdem ob das jeweilige Einzelmodul an der Versorgungsleiste am Anfang oder am Ende angekoppelt ist, wirkt sich eine bei hoher Leistungsabfrage absinkende Versorgungsspannung unterschiedlich stark aus. Man geht deshalb den Weg, Netzteile überzudimensionieren, um einen nicht nachvollziehbaren Funktionsausfall einzelner Module oder gar eine Überlastung des Netzteils zu vermeiden.

Zur Auslegung des netzteilseitigen Leistungsbedarfes wäre es prinzipiell denkbar, mittels eines Vorschaltwiderstandes in der Spannungsversorgung den aktuell gezogenen Strom zu messen, indem der Spannungsabfall am Vorschaltwiderstand erfaßt wird. Ein solcher Vorschaltwiderstand könnte in einem Primär- oder auch in einem Sekundärstromkreis der Spannungsversorgung liegen. Die Anordnung im Primärkreis brächte jedoch ein relativ unzuverlässiges Meßergebnis. Ein Vorschaltwiderstand im Sekundärkreis minderte dagegen die maximal zulässige Leistung der Einzelmodule bzw. des Einzelmoduls. Diese theoretisch möglichen Ansätze sind deshalb in der Praxis nicht verfolgt worden.

Der Erfindung liegt die Aufgabe zugrunde, ein modulares System der eingangs genannten Art so weiterzubilden, daß der Leistungsbedarf des Systems einfach kontrolliert werden kann. Der Erfindung liegt weiter die Aufgabe zugrunde, ein Verfahren zur Leistungsbedarfskontrolle bei einem modularen System der eingangs genannten Art anzugeben.

Diese Aufgabe wird erfindungsgemäß durch ein modulares System gelöst, das ein Hauptmodul und mehrere daran anschließbare Einzelmodule sowie ein System mit Spannung versorgendes Netzteil aufweist, wobei für jedes Einzelmodul mindestens ein vom Hauptmodul auslesbares Deskriptorelement vorgesehen ist, das den Leistungsbedarf des zugeordneten Einzelmoduls kodiert oder wiedergibt, und wobei das Hauptmodul die Deskriptorelemente der angeschlossenen Einzelmodule ausliest und daraus zur Verhinderung einer Netzteilüberlastung den Gesamtleistungsbedarf aller angeschlossenen Einzelmodule ermittelt.

Die Aufgabe wird weiter gelöst durch ein Verfahren zur Leistungsbedarfskontrolle eines modularen Systems, das ein Hauptmodul und mehrere daran anschließbare Einzelmodule sowie das System mit Spannung versorgendes Netzteil aufweist, wobei für jedes Einzelmodul mindestens ein vom Hauptmodul auslesbares Deskriptorelement vorgesehen wird, das den Leistungsbedarf des zugeordneten Einzelmoduls kodiert oder wiedergibt, und wobei die Deskriptorelemente der angeschlossenen Einzelmodule ausgelesen werden und daraus der Gesamtleistungsbedarf oder aller angeschlossenen Einzelmodule ermittelt wird.

Erfindungsgemäß wird also für jedes Einzelmodul, das an das System anzuschließen ist, ein Deskriptorelement vorgesehen, aus dem das Hauptmodul den Lastbedarf des Einzelmoduls erkennen kann. Überlastsituationen lassen sich damit einfach vermeiden. Dazu liest das Hauptmodul beispielsweise vor Inbetriebnahme des gesamten Systems oder vor Inbetriebnahme des Einzelmoduls das entsprechende Deskriptorelement aus, um sicherzustellen, daß durch die Inbetriebnahme des Systems/des Einzelmoduls die Leistungsfähigkeit des Netzteils nicht überschritten werden wird. Es kann somit das Auftreten eines Fehlers schon vor einer durch Sicherungen eingreifenden Leistungsbegrenzung vermieden werden. Dies gelingt erfindungsgemäß, da die Deskriptorelemente unabhängig vom tatsächlichen Betrieb der Einzelmodule ausgelesen werden können. Hier liegt ein wesentlicher Unterschied zu Vorschaltwiderständen, die immer erst im tatsächlichen Betrieb des Einzelmoduls die aktuelle Stromaufnahme anzeigen. Die betriebszustandsunabhängig abfragbaren Deskriptorelemente erlauben somit eine Systemdiagnose hinsichtlich des Leistungsbedarfes unabhängig vom normalen Systembetrieb.

Optional kann auch das Hauptmodul vor Kontaktieren eines Einzelmoduls mittels eines Software-Tools abfragen bzw. abgefragt werden, welche Leistungsreserven noch vorhanden sind. Das Software-Tool bestimmt die Leistungsbilanz des Systems unter Verwendung der Deskriptoren bzw. der in eine Tabelle übernommenen Deskriptoreinträge. Nun kann vor dem Anschluß eines weiteren Moduls an das bestehende System festgestellt werden, ob das hinzuzufügende Modul mit der bestehenden Energieversorgung versorgt werden kann. Das Software-Tool kann dazu eine entsprechende Freigabe des Moduls erst dann erteilen, wenn die Energieversorgung dies zuläßt. Die Freigabe kann beispielsweise dadurch erfolgen, daß das Modul erst dann mittels des Softwaretools zur Installation anwählbar ist, wenn ausreichende Leistungsreserven gegeben sind. Alternativ kann in der Softwaresimulation das zusätzliche Einzelmodul in einer Simulation an das Hauptmodul angeschlossen und der Leistungsbedarf des Systems ermittelt werden. Dies stellt eine besonders genaue Überprüfung dar, ob die Hinzufügung des Einzelmoduls möglich ist; ist dies der Fall, kann das zusätzliche Einzelmodul ohne bedenken angeschlossen werden.

Sollte in einem Fall ohne Ermittlung des Leistungsbedarfes ein Einzelmodul hinzugefügt werden, und sollten dabei die Leistungsreserven überschritten werden, wodurch eines der Einzelmodule nicht mehr ausreichend mit Spannung versorgt wird, gibt es auch die Möglichkeit, den Leistungsbedarf über die Auswertung der Deskriptorelemente nachträglich zu ermitteln und so die Unterversorgung der oder des Einzelmoduls aufklären zu können.

Erfindungsgemäß können also diese Deskriptorelemente unabhängig vom tatsächlichen Betrieb der Einzelmodule verwendet werden, was insbesondere eine Software-Simulation des Systems mit Hinblick auf den Leistungsbedarf erlaubt.

Der vom Deskriptorelement kodierte oder wiedergegebene Leistungsbedarf des zugeordneten Einzelmoduls kann beispielsweise aus Konstruktionsdaten oder Erprobungsergebnissen des Einzelmoduls stammen. Die Detail-Realisierung des Deskriptormoduls ist dabei in vielfältigen Varianten möglich, denen allen gemein ist, daß dem Hauptmodul die Deskriptorelemente unabhängig vom sonstigen Betrieb der Einzelmodule bekannt sind.

Eine besonders einfache Bauweise verwendet als Deskriptorelemente elektrische Widerstandselemente. Jedes Widerstandselement ist mit einem Anschluß auf Erde gelegt und mit dem anderen Anschluß mit dem Hauptmodul verbindbar. Bringt das Hauptmodul die derart angeschlossenen Widerstandselemente in Parallelschaltung, und kodiert der Widerstandswert jedes einzelnen Widerstandselementes den Leistungsbedarf, ergibt sich der Gesamtleistungsbedarf des Systems automatisch aus dem Gesamtswiderstandswert aller in Parallelschaltung liegender Widerstandselemente. Somit ist auf verblüffend einfache Weise eine Ein-Drahtverbindung zu den Deskriptorelementen erreicht. Verwendet man für die Widerstandselemente einen Widerstandswert der beispielsweise gemäß der Gleichung 10.000/(Leistung des Einzelmoduls) errechnet wurde, erhält man bei üblichen Modulleistungen Widerstandswerte in der Größenordnung von 100 kΩ. Eine Parallelschaltung solcher Widerstände ergibt in einer üblichen Spannungsteilerschaltung mit einem Referenzwiderstand von ebenfalls 100 kΩ bei einer Versorgungsspannung von 5 V eine maximale Meßspannung von 2,5 V, was ein für gängige Analog/Digital-Konverter optimaler, den Wandlerbereich voll ausschöpfender Wert ist.

Anstelle einer Kodierung der Leistungswerte durch andere, beispielsweise elektrische Größen, kann auch eine direkte Wiedergabe des Leistungswertes durch Speicherelemente verwendet werden. Speicher können dabei drahtlos oder drahtgebunden abgefragt werden. Ein Beispiel für eine Funkkommunikation mit einem passiven Speicherelement realisieren die dem Fachmann bekannten RFID-Chips. Aber auch aktive, mit einer Energiequelle versehene Systeme sind möglich. Das Auslesen der Deskriptorelemente erfolgt dann durch eine Funkkommunikation. Diese funkkommunizierenden Deskriptoren können vorzugsweise auch aktivierbar ausgestaltet werden, so daß eine Kommunikation erst nach Aktivierung des Deskriptors erfolgen kann. Besonders bevorzugt ist eine Aktivierung (z.B. Freigab einer Antenne), die bei Anbau/Anschluß des Einzelmoduls automatisch erfolgt.

Im Falle einer leitungsgebundenen Kommunikation zwischen Hauptmodul und Deskriptorelementen wird beispielsweise ein Datenbus verwendet werden, über den Datenspeicherbausteine in den Deskriptorelementen ausgelesen werden. Dafür ist es bevorzugt, daß die Deskriptorelemente jeweils einen über einen Datenbus mit dem Hauptmodul verbindbaren Datenspeicherbaustein aufweisen.

Bei leitungsgebundener Kommunikation ist in einer Variante ein Kontaktmechanismus der Deskriptoren vorgesehen, der einen Anschluß der Deskriptorelemente vor dem Anschließen des Einzelmoduls leisten, z.B. mittels bekannter voreilender Kontakte. Dann kann zuerst das Einzelmodul nur hinsichtlich des Deskriptorelements angeschlossen werden, um die Überprüfung zum Leistungsbedarf vorzunehmen. Erst wenn die Netzteilleistung sicher ausreicht, wird das Einzelmodul vollständig angeschlossen.

Wesentlich für den erfindungsgemäßen Ansatz ist, daß jedem Einzelmodul ein Deskriptorelement zugeordnet ist. Die Deskriptorelemente können dabei als eigenständige Bauteile vorgesehen werden, beispielsweise als Steckelemente, die in entsprechende Steckplätze des Hauptmoduls eingesteckt werden. Mit Einbau eines Moduls muß man dann lediglich auch das entsprechende Deskriptorelement mit dem Hauptmodul verbinden. Eine solche separate Verbindung zwischen Hauptmodul und Deskriptorelement kann entfallen, wenn in jedes Einzelmodul mindestens ein Deskriptorelement integriert ist, das bei Anschluß des Einzelmoduls an das Hauptmodul automatisch mit dem Hauptmodul verbunden ist. Der Montageaufwand beim Einbau eines Einzelmoduls fällt dann geringer aus.

In vielen Systemen stellt das Netzteil unterschiedliche Versorgungsspannungen zur Verfügung, beispielsweise ± 5 V, ± 15 V. Möchte man in solchen Fällen die Zahl der Deskriptorelemente so gering wie möglich halten, was beispielsweise bei nicht in die Einzelmodule integrierten Deskriptorelementen den Montageaufwand reduzieren kann, ist es zweckmäßig, wenn das Deskriptorelement einen Mischwert hinsichtlich des Leistungsbedarfes bei den verschiedenen, vom Einzelmodul verwendeten Versorgungsspannungen angibt. Eine genauere Berücksichtigung des Leistungsbedarfes erreicht man, wenn für jede vom Einzelmodul verwendete Versorgungsspannung bzw. für jede vom Netzteil bereitgestellte Versorgungsspannung pro Einzelmodul ein eigenes Deskriptorelement vorhanden ist, das den Leistungsbedarf bei der jeweiligen Versorgungsspannung kodiert oder wiedergibt.

Im erfindungsgemäßen Konzept ist, nachdem eine Schutzsicherung ansprach, durch die Entkopplung zwischen Betrieb der Einzelmodule und Ermittlung des Leistungsbedarfes eine weitergehende Fehleranalyse möglich. Es kann dann durch Auslesen der Deskriptorelemente auf eine Überlastung des Netzteils hin geprüft werden. Eine solche liegt vor, wenn der Gesamtleistungsbedarf eine durch das Netzteil vorgegebene Obergrenze überstieg. Konnte der Gesamtleistungsbedarf jedoch durch das Netzteil abgewickelt werden, muß ein anderer Fehler, beispielsweise ein Kurzschluß vorliegen.

Das erfindungsgemäße System bzw. das erfindungsgemäße Verfahren macht es einfach, das System zu erweitern und dabei die Vorgaben des Netzteils zu beachten. Vor Erweiterung eines Systems oder vor Inbetriebnahme eines erweiterten Systems ist es zweckmäßig, den Gesamtleistungsbedarf, z. B. mit einem Software-Tool, zu ermitteln. Übersteigt der Gesamtleistungsbedarf eine vom Netzteil vorgegebene Obergrenze kann man aus Sicherheitsgründen entweder den Betrieb des Systems völlig verhindern oder zumindest den Betrieb bestimmter Einzelmodule, beispielsweise des zuletzt hinzugefügten Einzelmoduls. Der Anwender kann dadurch die Einhaltung der durch das Netzteil vorgegebenen Rahmenbedingungen überwachen. Eine Systemerweiterung ist dann besonders einfach, wenn das Hauptmodul den ermittelten Gesamtleistungsbedarf anzeigt. Durch Vergleich mit den Leistungsparametem des Netzteils kann bereits vor einer Systemerweiterung, beispielsweise vor Zukauf eines weiteren Einzelmoduls, festgestellt werden, ob das Netzteil für diese Erweiterung ausreicht oder ob gegebenenfalls netzteilseitig eine Aufrüstung erfolgen muß. Es ist deshalb bevorzugt, daß vor Anschließen oder Aktivieren eines weiteren Einzelmoduls dessen Deskriptorelement ausgelesen und überprüft wird, ob im System der Leistungsbedarf auch dieses weiteren Einzelmoduls vom Netzteil befriedigt werden kann.

Natürlich können die vorgehend oder in den Ansprüchen geschilderten Verfahrensmerkmale auch durch das Hauptmodul realisiert werden und umgekehrt. Das Hauptmodul kann zur Realisierung der Lastbedarfskontrollfunktionalität ein entsprechendes Steuergerät aufweisen, das entweder im Hauptmodul integriert oder als extern zugeschaltetes Steuergerät (beispielsweise in Form eines Computers) ausgebildet sein kann.

Die Erfindung wird nachfolgend unter Bezugnahme auf die Zeichnungen beispielshalber noch näher erläutert. In den Zeichnungen zeigt:
- Fig. 1: ein Blockschaltbild eines modularen Mikroskopsystems, dessen Leistungsbedarf überwacht wird, und
- Fig. 2 und 3: elektrische Schaltbilder zur Realisierung von Deskriptorelementen, die in den Modulen des modularen Systems der Figur 1 vorgesehen sind.

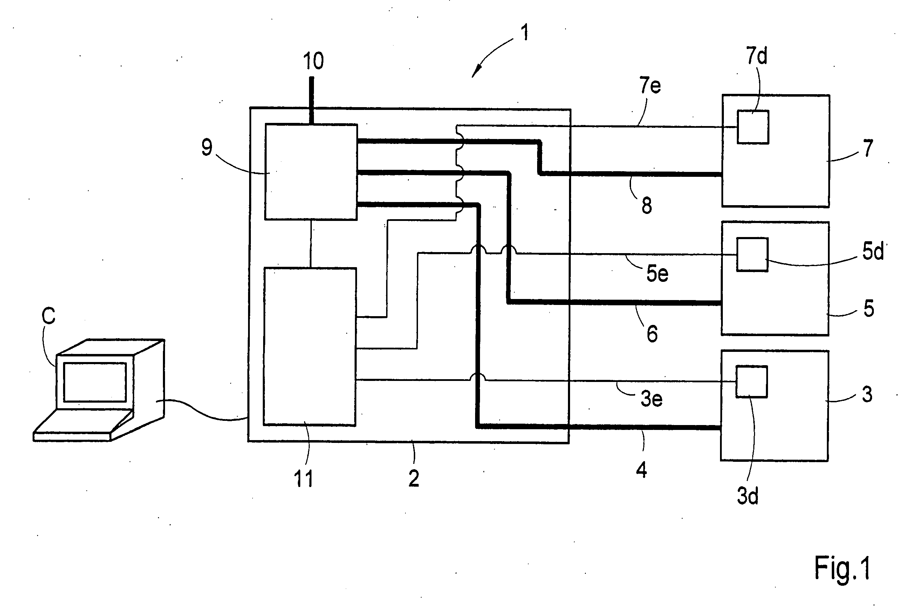

In Fig. 1 ist ein modulares elektrisches System am Beispiel eines modularen Mikroskopsystems 1 dargestellt. Das System 1 weist ein Hauptmodul 2 auf, bei dem es sich im Ausführungsbeispiel um ein Mikroskop-Basissystem handelt, an das verschiedene Beleuchtungs- und Detektionsmodule angekoppelt werden können. Diese Module sind Beispiele für die in Fig. 1 schematisch gezeigten Einzelmodule 3, 5 und 7. Jedes Einzelmodul 3, 5 und 7 wird über eine Stromleitung 4, 6, 8 von einem im Hauptmodul 2 vorgesehenen Netzteil 9 mit Energie versorgt. Die schematisch eingezeichneten Stromleitungen 4, 6, 8 können auch als Verteilerschiene in einer Modulaufnahme des Hauptmoduls 2 ausgebildet sein.

Das Netzteil 9 stellt den Einzelmodulen 3, 5, 7 verschiedene Versorgungsspannungen zur Verfügung, im Ausführungsbeispiel ± 5 sowie ± 15 V. Das Netzteil 9 ist seinerseits an eine Energieversorgung 10 angeschlossen, beispielsweise ein elektrisches Stromnetz mit 230 V Wechselspannung.

Zur Erfassung des Leistungsbedarfes des Gesamtsystems 1 und insbesondere der Einzelmodule 3, 5 und 7 verfügt das Hauptmodul 2 über eine Leistungserfassungsschaltung 11. Diese, die auch in anderen Steuerungselementen des Hauptmoduls 2 oder in einer extern mit dem Hauptmodul 2 verbundenen Steuereinheit (in Fig. 1 ist schematisch ein Computer C dargestellt) untergebracht sein kann, ist über Erfassungsleitungen 3I, 5I und 7I mit Deskriptoren 3d, 5d bzw. 7d verbunden, die in den Einzelmodulen 3, 5 und 7 vorgesehen sind.

Wie zu sehen ist, verfügt jedes Einzelmodul 3, 5 und 7 über einen Deskriptor. Jeder Deskriptor hält Information über den Leistungsbedarf des zugeordneten Einzelmoduls vor. Die Leistungserfassungsschaltung 11 kann damit durch Auslesen der Deskriptoren 3d, 5d und 7d einfach feststellen, wie groß der Leistungsbedarf aller angeschossene Einzelmodule 3, 5 und 7 ist. Unter Kenntnis der Leistung des Netzteils 9 (in Fig. 1 ist schematisch eine Verbindungsleitung zur Abfrage der Maximalleistung eingezeichnet) kann die Leistungserfassungsschaltung 11 damit unabhängig vom Betrieb des Systems 1 feststellen, ob die Leistung des Netzteils 9 ausreicht.

Die im Deskriptorelement 3d, 5d oder 7d niedergelegte Angabe kann beispielsweise aus einer Erprobung des Einzelmoduls 3, 5 oder 7 stammen, bei der die Stromaufnahme des Einzelmoduls ermittelt wurde.

Die Überwachung des Gesamtleistungsbedarfs des Systems 1 oder aller Einzelkomponenten 3, 5 und 7, d.h. des Systems 1 ohne Hauptmodul 2, kann zu jedem Zeitpunkt erfolgen. Insbesondere ist es möglich, bei sukzessivem Zuschalten oder Anbauen weiterer Einzelmodule den Leistungsbedarf oder die Stromaufnahme bei den Versorgungsspannungen zu verfolgen oder zu protokollieren.

Die Leistungserfassungsschaltung 11 kann über ein entsprechendes Ausgabemedium, beispielsweise über den Computer C, den Gesamtleistungsbedarf bzw. die noch verfügbare Restkapazität des Netzteils 9 anzeigen. Damit kann ein Benutzer, wenn er ein zusätzliches Einzelmodul in Betrieb nehmen will, das mehr Leistung benötigt, als das Netzteil 9 noch zur Verfügung hat, entweder eine Warnung zu einer notwendigen Netzteilerweiterung erhalten oder einen Vorschlag, welches Modul außer Betrieb bleiben könnte, um den Gesamtleistungsbedarf des in Betrieb befindlichen Systems innerhalb der durch das Netzteil 9 vorgegebenen Obergrenze zu halten. Es ist dann möglich, verzichtbare Module zu entfernen, ohne die Leistungswerte des Systems 1 im einzelnen kennen zu müssen.

Auch kann bis zur Begrenzung durch eine beispielsweise im Netzteil 9 oder in der Energieversorgung 10 vorgesehene Schutzsicherung eine Warnung des Benutzers vor einer Überlastsituation erfolgen. Die Leistungserfassungsschaltung 11 kann auch nach dem Ansprechen einer solchen Sicherung eine Fehleranalyse vornehmen und anzeigen, ob die Sicherung wegen einer Überlast des Netzteils 9 ansprach oder nicht. Lag keine Überlast des Netzteils 9 vor, muß ein anderer Fehler im System 1, beispielsweise ein Kurzschluß vorliegen. In einer Variante der Erfindung ist eine entsprechende Anzeige vorgesehen.

Der Benutzer kann über die beispielsweise in Form des Computer C realisierte Ausgabeeinheit bestimmen, ob eine Netzteilerweiterung ein weiteres Netzteil oder ein verstärktes Netzteil erforderlich ist. Eine Aufrüstung des Netzteils 9 kann beispielsweise durch ein weiteres Netzteil, geeignete Kompensatoren, Akkumulatoren oder Batterien erfolgen, die für bestimmte Betriebszustände oder grundsätzlich die Kapazität des Netzteils 9 steigern. Die Überprüfung kann auch über eine (in Fig. 1 nicht gezeigte) Datenverbindung direkt von einem Servicedienst des Systemherstellers oder einem externen Systembetreuer vorgenommen werden. Das System gemäß Fig. 1 erlaubt somit eine Fehlerferndiagnose, so daß Fehler im installierten System schnell erkannt und Gegenmaßnahmen eingeleitet werden können.

In einer Variante des Systems 1 der Fig. 1 stellt das Netzteil 9 verschiedene Versorgungsspannungen zur Verfügung, beispielsweise ± 5 V und ± 15 V. Die Deskriptoren 3d, 5d und 7d kodieren dann einen mittleren Leistungsbedarf (gemittelt über alle Spannungen). In einer alternativen Ausgestaltung ist für jede Spannung für jedes Einzelmodul ein eigenes Deskriptorelement vorgesehen (in Fig. 1 nicht dargestellt).

In Fig. 1 sind die Deskriptoren als Bestandteile der Einzelmodule 3, 5 und 7 eingezeichnet. In einer Variante der Bauweise des Systems 1 sind die Deskriptoren eigenständig und unabhängig von den Einzelmodulen. Beispielsweise hat das Hauptmodul 2 geeignete Steckplätze, in die die Deskriptoren der angeschlossenen Einzelmodule eingesteckt sind.

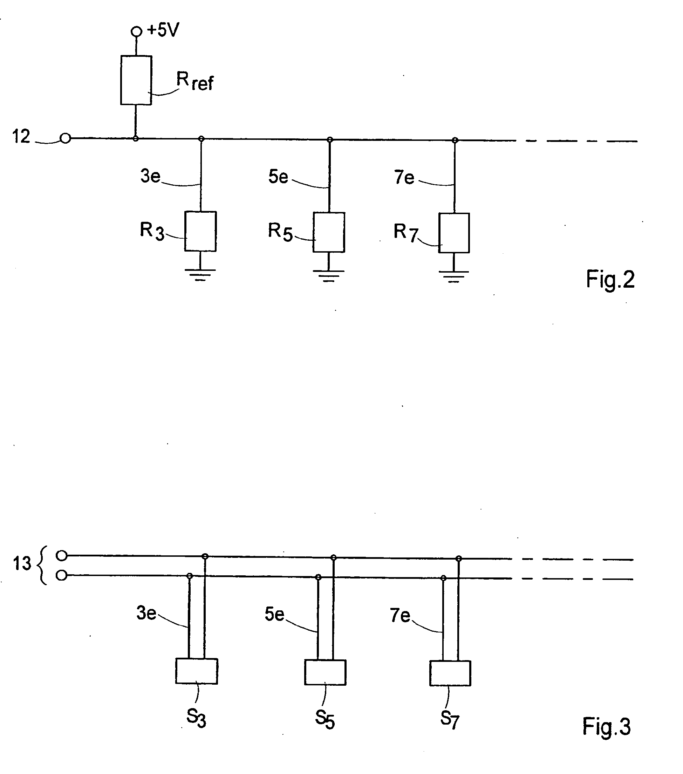

Fig. 2 zeigt eine mögliche Bauweise für die Deskriptoren 3d, 5d und 7d. Sie sind jeweils als Widerstände R3, R5 und R7 realisiert. Ein Anschluß jedes Widerstandes ist auf Erde gelegt, der andere ist mit der jeweiligen Erfassungsleitung 3I, 5I und 7I verbunden. Die Leistungserfassungsschaltung 11 schaltet nun alle Widerstände R3, R5 und R7 parallel in einer Spannungsteilerschaltung, wie sie Fig. 2 zeigt. Der Spannungsteiler besteht dabei aus einem Referenzwiderstand Rref, der zwischen einer Versorgungsspannung, hier + 5 V, und der Verbindungsleitung zwischen den Erfassungsleitungen 3I, 5I und 7I zu den Widerständen R3, R5 und R7 liegt. Diese Verbindung liefert gleichzeitig einen Meßpunkt 12, an dem die Leistungserfassungsschaltung 11 den sich einstellenden Spannungswert erfaßt. Die Spannung am Meßpunkt 12 gibt damit exakt den Gesamtleistungsbedarf der Einzelmodule 3, 5 und 7 (kodiert in Form der Widerstände R3, R5 und R7) wieder.

Sind die Einzelwiderstände R3, R5 und R7 in gleicher Größenordnung wie der Referenzwiderstand Rref, wie eingangs bereits erläutert, liegt am Meßpunkt 12 eine Meßspannung ≤ 2,5 V an, was üblicherweise der maximale Spannungswert für einen A/D-Wandler ist.

In der Variante, in der für jeden Spannungswert ein eigener Deskriptor verwendet ist, liegt für jeden Spannungswert eine Spannungsteilerkette gemäß Fig. 2 vor. Die jeweiligen Meßpunkte geben dann den Leistungsbedarf bei der jeweiligen Versorgungsspannung wieder.

Fig. 3 zeigt alternative Ausgestaltung der Deskriptorelemente, die hier als Speicherelemente S3, S5 und S7 ausgeführt sind. Diese Speicherelemente halten Angaben über den Leistungsbedarf des zugeordneten Einzelmoduls 3, 5 oder 7, in einer Ausführungsform auch aufgeteilt nach verschiedenen Versorgungsspannungen. Über ein Leitungssystem sind die Speicherelemente S3, S5 und S7 mit einem Busanschluß 13 verbunden, so daß die Leistungserfassungsschaltung 11 durch einfache Abfrage der Speicherelemente über den Bus, der beispielsweise nach dem USB-System oder dem CAN-Bus ausgeführt sein kann, den Leistungsbedarf jedes einzelnen Einzelmoduls 3, 5, 7 und auch den Gesamtleistungsbedarf je nach Ausführungsform sogar individuell für die einzelnen Versorgungsspannungen erfaßt.

Es sind auch Ein-, Zwei- oder Vieldrahtbussysteme möglich. Durch die Auswertung der Deskriptorelemente 3d, 5d, 7d kann somit eine optimale Auslastung bei den einzelnen Spannungen (welche von Einzelmodul zu Einzelmodul unterschiedlich stark gefordert sein können) erreicht werden.

## Patentansprüche

1. Modulares System, das ein Hauptmodul (2) und mehrere daran anschließbare Einzelmodule (3, 5, 7) sowie ein das System (1) mit Spannung versorgendes Netzteil (9) aufweist, wobei für jedes Einzelmodul (3, 5, 7) mindestens ein vom Hauptmodul auslesbares Deskriptorelement (3d, 5d, 7d) vorgesehen ist, das einen nicht vom tatsächlichen Betrieb des zugeordneten Einzelmoduls (3, 5, 7) abhängenden Leistungsbedarf des zugeordneten Einzelmoduls (3, 5, 7) kodiert oder wiedergibt, und wobei das Hauptmodul (2) die Deskriptorelemente (3d, 5d, 7d) der angeschlossenen Einzelmodule (3, 5, 7) ausliest und daraus zur Verhinderung einer Netzteilüberlastung den nicht vom tatsächlichen Betrieb des Systems (1) abhängenden Gesamtleistungsbedarf aller angeschlossenen Einzelmodule (3, 5, 7) ermittelt.

2. System nach Anspruch 1, wobei die Deskriptorelemente (3d, 5d, 7d) jeweils mindestens ein elektrisches Widerstandselement (R3, R5, R7) aufweisen, das einerseits auf Erde gelegt und andererseits mit dem Hauptmodul (2) verbindbar ist, und dessen Widerstandswert den Leistungsbedarf des Einzelmoduls (3, 5, 7) kodiert, wobei das Hauptmodul (2) den Gesamt-Widerstandswert aller in Parallelschaltung liegenden Widerstandselemente (R3, R5, R7) bestimmt.

3. System nach Anspruch 1, wobei die Deskriptorelemente (3d, 5d, 7d) jeweils einen über einen Datenbus mit dem Hauptmodul (2) verbindbaren Datenspeicherbaustein (S3, S5, S7) aufweisen.

4. System nach einem der obigen Ansprüche, wobei in jedes Einzelmodul (3, 5, 7) mindestens ein Deskriptorelement (3d, 5d, 7d) integriert ist, das bei Anschluß des Einzelmoduls (3, 5, 7) an das Hauptmodul (2) automatisch mit dem Hauptmodul (2) verbunden ist.

5. System nach einem der obigen Ansprüche, wobei das Netzteil (9) den Einzelmodulen (3, 5, 7) mehrere Versorgungsspannungen bereitstellt und für jedes Einzelmodul (3, 5, 7) pro Versorgungsspannung ein Deskriptorelement (3d, 5d, 7d) vorgesehen ist, das den Leistungsbedarf bei dieser Versorgungsspannung kodiert oder wiedergibt.

6. Verfahren zur Leistungsbedarfskontrolle eines modularen System (1), das ein Hauptmodul (2) und mehrere daran anschließbare Einzelmodule (3, 5, 7) sowie das System (1) mit Spannung versorgendes Netzteil (9) aufweist, wobei für jedes Einzelmodul (3, 5, 7) mindestens ein vom Hauptmodul (2) auslesbares Deskriptorelement (3d, 5d, 7d) vorgesehen wird, das einen nicht vom tatsächlichen Betrieb des zugeordneten Einzelmoduls (3, 5, 7) abhängenden Leistungsbedarf des zugeordneten Einzelmoduls (3, 5, 7) kodiert oder wiedergibt, und wobei die Deskriptorelemente (3d, 5d, 7d) der angeschlossenen Einzelmodule (3, 5, 7) ausgelesen werden und daraus der nicht vom tatsächlichen Betrieb des Systems (1) abhängende Gesamtleistungsbedarf aller angeschlossenen Einzelmodule (3, 5, 7) ermittelt wird.

7. Verfahren nach Anspruch 6, wobei der Gesamtleistungsbedarf des modularen Systems (1) vor Aktivieren aller angeschlossener Einzelmodule (3, 5, 7) ermittelt wird und bei einem Gesamtleistungsbedarf, der eine durch das Netzteil (9) vorgegebenen Obergrenze übersteigt, der gleichzeitige Betrieb aller Einzelmodule oder der Betrieb bestimmter Einzelmodule (3, 5, 7) verhindert wird.

8. Verfahren nach Anspruch 6 oder 7, wobei nach Ansprechen einer elektrischen Schutzsicherung der Gesamtleistungsbedarf des modularen System (1) mit einer durch das Netzteil (9) vorgegebenen Obergrenze verglichen wird, um einen Kurzschluß im System (1) von einer Überlastung des Netzteils (9) unterscheiden zu können.

9. Verfahren nach Anspruch 6, 7 oder 8, wobei vor Anschließen oder Aktivieren eines weiteren Einzelmoduls (3, 5, 7) dessen Deskriptorelement (3d, 5d, 7d) ausgelesen und überprüft wird, ob im System (1) der Leistungsbedarf auch dieses weiteren Einzelmoduls (3, 5, 7) vom Netzteil (9) befriedigt werden kann.

## Claims

1. A modular system, comprising a main module (2) and several individual modules (3, 5, 7) connectable to said main module (2) as well as a power supply unit (9) supplying the system (1) with a voltage, wherein for each individual module (3, 5, 7) at least one descriptor element (3d, 5d, 7d) is provided, which the main module can read-out and which encodes or indicates the maximum power demand of the assigned individual module (3, 5, 7), said maximum power demand not depending on the actual operation of the assigned individual module (3, 5, 7), and wherein the main module (2) reads-out the descriptor elements (3d, 5d, 7d) of the connected individual modules (3, 5, 7) and thereby determines the total maximum power demand, not depending on the actual operation of the system (1), of all connected individual modules (3, 5, 7) in order to prevent an overload of the power supply unit.

2. The system as claimed in claim 1, wherein the descriptor elements (3d, 5d, 7d) each comprise at least one electric resistor element (R3, R5, R7), which is grounded on its one end and is connectable to the main module (2) on its other end and whose resistance value encodes the maximum power demand of the individual module (3, 5, 7), with the main module (2) determining the total resistance value of all resistor elements (R3, R5, R7) connected in parallel.

3. The system as claimed in claim 1, wherein the descriptor elements (3d, 5d, 7d) each comprise a data storage chip (S3, S5, S7) which is connectable to the main module (2) via a databus.

4. The system as claimed in any one of the above claims, wherein each individual module (3, 5, 7) incorporates at least one descriptor element (3d, 5d, 7d) which is automatically connected to the main module (2) when connecting the individual module (3, 5, 7) to the main module (2).

5. The system as claimed in any one of the above claims, wherein the power supply unit (9) provides several supply voltages to the individual modules (3, 5, 7), and for each individual module (3, 5, 7) one descriptor element (3d, 5d, 7d) is provided for each supply voltage, encoding or indicating the maximum power demand at said supply voltage.

6. A method for controlling the maximum power demand of a modular system (1), said modular system (1) comprising a main module (2) and several individual modules (3, 5, 7) connectable thereto as well as a power supply unit (9) supplying the system (1) with a voltage, wherein for each individual module (3, 5, 7) at least one descriptor element (3d, 5d, 7d) is provided, which the main module (2) can read-out and which encodes or indicates a maximum power demand of the assigned individual module (3, 5, 7), said maximum power demand not depending on the actual operation of the assigned individual module (3, 5, 7), and wherein the descriptor elements (3d, 5d, 7d) of the connected individual modules (3, 5, 7) are read-out and the total maximum power demand, not depending on the actual operation of the system (1), of all connected individual modules (3, 5, 7) is determined.

7. The method as claimed in claim 6, wherein the total maximum power demand of the modular system (1) is determined before activating all connected individual modules (3, 5, 7) and, in the case of a total maximum power demand exceeding an upper limit given by the power supply unit (9), simultaneous operation of all individual modules or operation of specific individual modules (3, 5, 7) is prevented.

8. The method as claimed in claim 6 or 7, wherein, after breaking of an electric safety fuse, the total maximum power demand of the modular system (1) is compared with an upper limit given by the power supply unit (9) in order to be able to distinguish a short circuit in the system (1) from an overload of the power supply unit (9).

9. The method as claimed in claim 6, 7 or 8, wherein prior to connecting or activating a further individual module (3, 5, 7) the descriptor element (3d, 5d, 7d) of the further individual module is read-out, and it is checked whether in the system (1) the maximum power demand of this further individual module (3, 5, 7) can also be satisfied by the power supply unit (9).

## Revendications

1. Système modulaire présentant un module principal (2) et plusieurs modules individuels (3, 5, 7) pouvant y être connectés, ainsi qu'un bloc secteur (9) fournissant le système (1) en tension, dans lequel au moins un élément descripteur (3d, 5d, 7d) lisible par le module principal est prévu pour chaque module individuel (3, 5, 7), qui code et restitue un besoin de puissance du module individuel correspondant, besoin qui ne dépend pas du fonctionnement réel du module individuel (3, 5, 7) correspondant et le module principal (2) lit les éléments descripteurs (3d, 5d, 7d) des modules individuels (3, 5, 7) connectés et détermine à partir de cela le besoin total en puissance, qui ne dépend pas du fonctionnement réel de tous les modules individuels (3, 5, 7) connectés, afin d'empêcher une surcharge du réseau.

2. Système selon la revendication 1, dans lequel les éléments descripteurs (3d, 5d, 7d) présentent chacun un élément résistant électrique (R3, R5, R7) qui peut être d'un côté mis à la terre et de l'autre côté connecté au module principal (2) et dont la valeur de résistance code le besoin en puissance des modules individuels (3, 5, 7), le module principal (2) déterminant la valeur de résistance totale de tous les éléments résistants électriques (R3, R5, R7) montés en parallèle.

3. Système selon la revendication 1, dans lequel les éléments descripteurs (3d, 5d, 7d) présentent chacun un bloc de mémoire de données (S3, S5, S7) pouvant être connecté au module principal (2).

4. Système selon l'une des revendications précédentes, dans lequel au moins un élément descripteur (3d, 5d, 7d) est intégré à chaque module individuel (3, 5, 7) qui, lorsque le module individuel (3, 5, 7) est connecté au module principal (2), est automatiquement connecté à celui-ci.

5. Système selon l'une des revendications précédentes, dans lequel le bloc secteur (9) fournit aux modules individuels (3, 5, 7) plusieurs tensions d'alimentation et qu'un élément descripteur (3d, 5d, 7d) est prévu par tension d'alimentation pour chaque module individuel (3, 5, 7) qui code et restitue le besoin en puissance pour chaque tension d'alimentation.

6. Procédé de contrôle du besoin en puissance d'un système modulaire (1) présentant un module principal (2) et plusieurs modules individuels (3, 5, 7) pouvant y être connectés, ainsi qu'un bloc secteur (9) fournissant le système (1) en tension, dans lequel au moins un élément descripteur (3d, 5d, 7d) lisible par le module principal (2) est prévu pour chaque module individuel (3, 5, 7), qui code et restitue un besoin de puissance du module individuel correspondant, besoin qui ne dépend pas du fonctionnement réel du module individuel (3, 5, 7) correspondant, les éléments descripteurs (3d, 5d, 7d) des modules individuels (3, 5, 7) connectés sont lus et, à partir de cela, le besoin total en puissance, qui ne dépend pas du fonctionnement réel de tous les modules individuels (3, 5, 7) connectés, est détecté.

7. Procédé selon la revendication 6, dans lequel le besoin total en puissance du système modulaire (1) est détecté avant l'activation de tous les modules individuels (3, 5, 7) connectés et, pour un besoin total en puissance qui dépasse une limite supérieure prédéterminée par le bloc secteur (9), le fonctionnement simultané de tous les modules individuels ou le fonctionnement de certains modules individuels (3, 5, 7) est empêché.

8. Procédé selon la revendication 6 ou 7, dans lequel, après sollicitation d'un disjoncteur de sécurité, le besoin total en puissance du système modulaire (1) est comparé à une limite supérieure prédéterminée par le bloc secteur (9) pour pouvoir distinguer un court-circuit dans le système (1) d'avec une surcharge du bloc secteur (9).

9. Procédé selon la revendication 6, 7 ou 8, dans lequel, avant de connecter ou d'activer un autre module individuel (3, 5, 7) dont l'élément descripteur (3d, 5d, 7d) est lu et contrôlé, pour savoir si dans le système (1), le besoin en puissance de cet autre module individuel (3, 5, 7)peut aussi être satisfait par le bloc secteur (9).
